# EUROPÄISCHE PATENTANMELDUNG

(11) **EP 1 338 201 A1**
(43) Veröffentlichungstag der Anmeldung: **27.08.2003**
(21) Anmeldenummer: 02004114.1
(22) Anmeldetag: 25.02.2002
(51) Int. Cl.: A21C 9/06, A21C 11/10

(54) **Teigbearbeitungsmaschine zur Herstellung gefüllter Backstücke**

(71) Anmelder: Palásti, Jozsef, 6115 Kunszállás (HU)
(72) Erfinder: Palásti, Jozsef, 6115 Kunszállás (HU)
(74) Vertreter: Glawe, Delfs, Moll & Partner

(57) **Zusammenfassung**

Teigbearbeitungsmaschine zur Herstellung gefüllter Backstücke, insbesondere von gefülltem schneckenartig aufgerolltem Kleingebäck, mit einer Arbeitsfläche (2) zum Auflegen von Teigmaterial, das aus zwei Teiglagen (11,13) mit einer dazwischenliegenden Füllung (12) besteht, und Stationen zum Bearbeiten des Teigmaterials, wobei die Arbeitsfläche (2) eine Transporteinrichtung (21, 22, 23, 24) zum Bewegen des Teigmaterials in einer Arbeitsrichtung (29) aufweist und daß die Stationen eine erste Zuführeinrichtung (3) für eine untere Lage Teigmaterial (11), eine Fülleinrichtung (5), die zum Auffüllen von Füllungsmaterial in einer Vielzahl von Reihen auf die untere Lage Teigmaterial (11) ausgebildet ist, eine zweite Zuführeinrichtung (6) für eine obere Lage Teigmaterial (13), eine Schneideinrichtung (7) mit einem vielreihigen Schneidwerkzeug (70), das zum Längsschneiden des Teigmaterials in eine Vielzahl von Streifen ausgebildet ist, und eine Querschneideinrichtung (8) zum Aufteilen der Streifen in Stücke mit einem Trennwerkzeug umfassen, das sich quer zur Arbeitsrichtung (29) über die Breite der Arbeitsfläche (2) erstreckt. Die erfindungsgemäße Teigbearbeitungsmaschine ermöglicht die Herstellung von Teigstücken (16) für kleine, gefüllte Mini-Backstücke in einer Vielzahl von Reihen, wobei die gesamte Breite der Arbeitsfläche ausgenutzt wird. Dadurch erreicht die Teigbearbeitungsmaschine einen hohen Durchsatz.

## Beschreibung

Die Erfindung betrifft eine Teigbearbeitungsmaschine zur Herstellung gefüllter Backstücke, insbesondere von gefülltem schneckenartig aufgerollten Kleingebäck, mit einer Arbeitsfläche zum Auflegen von Teigmaterial, das aus zwei Teiglagen mit einer dazwischen liegenden Füllung besteht, und Stationen zum Bearbeiten des Teigmaterials, wobei die Arbeitsfläche eine Transporteinrichtung zum Bewegen des Teigmaterials in einer Arbeitsrichtung aufweist und die Stationen eine erste Zuführeinrichtung für eine untere Lage Teigmaterial, eine Fülleinrichtung, die zum Aufbringen von Füllungsmaterial in mehreren Reihen, vorzugsweise mindestens 10, auf die untere Lage Teigmaterial ausgebildet ist, eine zweite Zuführeinrichtung für eine obere Lage Teigmaterial, eine Schneideinrichtung mit einem mehrreihigen Schneidwerkzeug, das zum Längsschneiden des Teigmaterials in einer Vielzahl von Streifen ausgebildet ist, und eine Querschneideinrichtung zum Aufteilen der Streifen in Stücke mit einem Trennwerkzeug umfassen, das sich quer zur Arbeitsrichtung über die Breite der Arbeitsfläche erstreckt.

Im Bereich des Backwarenvertriebs ist in jüngerer Zeit ein Trend zu so genannten "Schaubäk-kereien" zu erkennen. Diese Schaubäckereien unterscheiden sich von den klassischen handwerklich geführten Bäckereien dadurch, daß es sich bei ihnen um reine Verkaufsstellen ohne eigentliche Backstube handelt.

Die hier zu verkaufende Backware wird in gesonderten Betrieben in industriellem Maßstab hergestellt. Ein solcher Betrieb kann eine erhebliche Anzahl von Schaubäckereien als Verkaufsstellen mit Backware versorgen. Die industrielle Fertigung im großen Maßstab ermöglicht es einerseits, neuartige Produktlinien von Backprodukten anzubieten, verlangt andererseits aber auch, daß die Backprodukte rationell und in großen Stückzahlen herstellbar sind. Es hat sich gezeigt, daß eine erhebliche Nachfrage nach gefüllten Mini-Backstücken vorhanden ist, die von Abmessungen und Gewicht her wesentlich kleiner als herkömmliche Backstücke sind. Das Gewicht dieser Mini-Backstücke liegt in der Regel zwischen 15 und 20 g bei Abmessungen von etwa 2 - 3 cm. Um derartig kleine Mini-Backstücke rationell in großen Stückzahlen herstellen zu können, sind geeignete Teigbearbeitungsmaschinen erforderlich. Bekannte Maschinen eignen sich dazu nicht.

Aus offenkundiger Vorbenutzung sind Teigbearbeitungsmaschinen für Backstücke in herkömmlicher Größe bekannt. Typischerweise weisen diese Vorrichtungen eine Arbeitsflächenbreite von etwa 600 mm auf. Auf dieser Breite können nur etwa drei Reihen von Backstücken nebeneinander verarbeitet werden. Der damit erreichbare Durchsatz wäre viel zu gering. Mit einer derart geringen Reihenanzahl können die Mini-Gebäckstücke nicht rationell hergestellt werden. Im Übrigen sind die zur Verarbeitung der herkömmlichen Backstücke vorgesehenen Werkzeuge zu groß für die Bearbeitung von Teigstücken für die Mini-Backstücke, und sie können nicht in dem erforderlichen Umfang verkleinert werden, ohne erhebliche Umkonstruktionen durchzuführen, die letztlich zu einer neuen Maschine führen würden.

Ebenfalls aus offenkundiger Vorbenutzung sind Maschinen zur Herstellung von Keksen bekannt. Kekse haben ein etwa vergleichbares Gewicht und etwa vergleichbare Abmessungen, ferner gibt es gefüllte Kekse. Dennoch eignen sich Keksbearbeitungsmaschinen nicht zur Herstellung von Teigstücken für die Mini-Backstücke. Bei der Keksherstellung wird die Füllung üblicherweise erst nach dem Backen in die Kekse eingebracht. Das bedeutet, daß das Backen des Keksteigs noch bei der Herstellung erfolgen muß. Demgegenüber werden die Mini-Backstücke in dem Herstellungsbetrieb lediglich zubereitet, aber noch nicht gebacken, um dann schließlich im tiefgefrorenen Zustand zu den einzelnen Verkaufsstellen ausgefahren zu werden; erst dort werden sie dann gebacken.

Der Erfindung liegt die Aufgabe zugrunde, eine Teigbearbeitungsmaschine zur Herstellung von Teigstücken für gefüllte Mini-Backstücke zu schaffen, mit der auch kleine Backstücke rationell und mit hoher Stückzahl hergestellt werden können.

Die erfindungsgemäße Lösung liegt in einer Teigbearbeitungsmaschine mit den Merkmalen des Anspruchs 1. Vorteilhafte Weiterbildungen ergeben sich aus den Unteransprüchen.

Erfindungsgemäß ist bei einer Teigbearbeitungsmaschine zur Herstellung gefüllter Backstücke, insbesondere von gefüllten Kleingebäck, mit einer Arbeitsfläche zum Auflegen von Teigmaterial, das aus zwei Teiglagen mit einer dazwischenliegenden Füllung besteht, und Stationen zum Bearbeiten des Teigmaterials, wobei die Arbeitsfläche eine Transporteinrichtung zum Bewegen des Teigmaterials in einer Arbeitsrichtung aufweist, vorgesehen, daß die Stationen eine erste Zuführeinrichtung für eine untere Lage Teigmaterial, eine Fülleinrichtung, die zum Aufbringen von Füllungsmaterial in einer Vielzahl von Reihen, vorzugsweise mindestens 20, auf die untere Lage Teigmaterial ausgebildet ist, eine zweite Zuführeinrichtung für eine obere Lage Teigmaterial, eine Schneideinrichtung mit einem vielreihigen Schneidwerkzeug, das zum Längsschneiden des Teigmaterials in eine Vielzahl von Streifen ausgebildet ist und eine Querschneideinrichtung zum Aufteilen der Streifen in Stücke mit einem Trennwerkzeug umfaßt, das sich quer zur Arbeitsrichtung über die Breite der Arbeitsfläche erstreckt.

Mit der erfindungsgemäßen Teigbearbeitungsmaschine können Mini-Backstücke mit kleinen Abmessungen in großer Stückzahl hergestellt werden. Die erfindungsgemäße Teigbearbeitungsmaschine ermöglicht einen vollautomatisierten und kontinuierlichen Betrieb und so eine rationelle Herstellung. Die erfindungsgemäße Anordnung der Stationen ermöglicht es, daß bei der Teigbearbeitung einschließlich dem Aufbringen der Füllung immer die volle Arbeitsbreite der Arbeitsfläche ausgenutzt werden kann. Das wird erfindungsgemäß dadurch erreicht, daß von der ersten Zuführeinrichtung ein unteres Teigblatt auf die Arbeitsfläche gelegt wird, auf das dann mittels der Fülleinrichtung ebenfalls über die gesamte Arbeitsbreite das Füllungsmaterial in mehreren Reihen aufgebracht wird, und schließlich von der zweiten Zuführeinrichtung die obere Lage Teigmaterial aufgelegt wird. Mit dieser Stationsanordnung wird erreicht, daß das gefüllte Teigmaterial sich über die gesamte Arbeitsbreite der Maschine erstreckt. Darin liegt ein wesentlicher Unterschied zu Teigbearbeitungsmaschinen von Backstücken in herkömmlichen Größen, bei denen die untere Teiglage entlang einer etwa mittig verlaufenden Klapplinie umgeklappt und auf diese Weise als obere Teiglage die Füllung bedeckt. Durch das Umklappen verbleibt ein Freiraum zwischen nebeneinanderliegender Reihen von Backstücken, so daß die zur Verfügung stehende Arbeitsbreite nur etwa zur Hälfte genutzt wird.

Mittels der Schneideinrichtung wird das gefüllte Teigmaterial in eine Vielzahl von Streifen geschnitten, und zwar über die gesamte Arbeitsflächenbreite. Zweckmäßigerweise sind die Schneideinrichtungen dazu so ausgerichtet, daß sie jeweils zwischen den Reihen des Füllmaterials schneiden.

Mittels der Querschneideinrichtung schließlich werden die Streifen in einzelne Stücke mittels eines Trennwerkzeugs geteilt. Das Trennwerkzeug erstreckt sich quer ebenfalls über die Arbeitsbreite der Maschine. Am Ende der Querschneideinrichtung sind also schließlich gefüllte Teigstücke entstanden, die in einer Vielzahl von Reihen angeordnet sich über die gesamte Arbeitsbreite der Maschine erstrecken.

Mit der erfindungsgemäßen Teigverarbeitungsmaschine wird also erreicht, daß die einzelnen Stücke gleichzeitig in einer Vielzahl von Reihen hergestellt werden können, wobei die gesamte Arbeitsbreite der Maschine ausgenutzt wird. Damit ermöglicht die erfindungsgemäße Teigbearbeitungsmaschine einen hohen Durchsatz und damit eine rationelle Herstellung der Teigstücke für die Mini-Backwaren.

Nachfolgend seien einige verwendete Begriffe erläutert:
Unter Arbeitsbreite wird die zur Teigbearbeitung nutzbare Breite verstanden. Sie ist maximal so groß wie die physische Breite der Arbeitsfläche. Werden Ränder der Arbeitsfläche nicht zur Produktherstellung genutzt, sondern beispielsweise zur Abführung von Teigrandresten, so kann die Arbeitsbreite geringer sein als die Breite der Arbeitsfläche.

Unter einer Vielzahl von Streifen oder Reihen oder unter vielreihig wird eine mindestens 10 betragende Anzahl verstanden.

Unter Mini-Backstücken werden Backstücke mit einem Gewicht unter 40 g, vorzugsweise unter 20 g verstanden.

Zweckmäßigerweise umfaßt die Teigbearbeitungsmaschine eine in Arbeitsrichtung hinter der Querschneideinrichtung angeordnete Aufrolleinrichtung, die zum Aufwickeln der Stücke zu Schnekken ausgebildet ist. Damit ist die Herstellung von gefüllten Mini-Schnecken ermöglicht, die weder in herkömmlicher Handarbeit noch mit herkömmlichen Teigbearbeitungsmaschinen rationell hergestellt werden könnten.

Bei einer zweckmäßigen Ausführungsform ist die Querschneideinrichtung mit einem auf und ab beweglichen Fallmesser und einer Antriebseinrichtung zur taktweisen Betätigung versehen. Dank des Fallmessers wird die zum Schneiden benötigte Zeit auf ein Minimum reduziert. Dadurch können auch bei kontinuierlich bewegtem Teigmaterial saubere Schnitte erzeugt werden. Ein aufwendiger Start- und Stop-Betrieb der Transportanlage kann damit vermieden werden, mit entsprechend Vorteilen für den Durchsatz der Teigbearbeitungsmaschine.

Zweckmäßigerweise ist die Querschneideinrichtung mit einem Mehrfachmesser versehen, das mindestens zwei wechselweise unterbrochene Schneidkanten aufweist. Das Mehrfachmesser kann beispielsweise als ein Doppelmesser ausgeführt sein, das zwei zueinander versetzte Schneidkanten aufweist. Vorzugsweise sind die Schneidkanten parallel zueinander angeordnet. Durch die wechselweise Unterbrechung der Schneidkanten wird erreicht, daß zwar die Teigstreifen in der vollen Arbeitsbreite geschnitten werden, daß jedoch jede zweite Reihe versetzt zu den anderen Reihen geschnitten wird. Dadurch sind die Trennlinien zwischen den Stücken in jeder Reihe versetzt zu den Trennlinien der Stücke in den beiden benachbarten Reihen. Zweckmäßig ist es, wenn der Abstand zwischen den Schneidkanten so bemessen ist, daß er der halben Länge der Stücke entspricht. Dadurch wird erreicht, daß der Anfang der Stücke in einer Reihe jeweils in der Mitte der Stücke der beiden benachbarten Reihen liegt. Damit bilden die Anfänge der Stücke eine zickzackartige Front, die sich besonders gut für eine nachfolgende Vereinzelung der Stücke eignet.

Zweckmäßigerweise ist das Mehrfachmesser so ausgerichtet, daß die Schneidkanten rechtwinklig zur Arbeitsrichtung angeordnet sind. Dadurch lassen sich rechteckige Stücke erzeugen. Alternativ kann auch vorgesehen sein, daß das Mehrfachmesser so ausgerichtet ist, daß die einzelnen Schneidkanten schräg zur Arbeitsrichtung angeordnet sind. Mit der schrägen Anordnung kann eine von der normalen Rechteckform abweichende Form der Stücke erreicht werden, beispielsweise eine Rhombenform.

Bei einer besonders zweckmäßigen Ausführungsform, die gegebenenfalls unabhängigen Schutz verdient, weist die Transporteinrichtung ein mit erhöhter Geschwindigkeit arbeitendes Segment auf, das in Arbeitsrichtung gesehen hinter der Querschneideinrichtung angeordnet ist. Ein solches schneller laufendes Segment eignet sich zum Trennen der Stücke. Sowie eine Querreihe von Stücken auf dieses schnellerlaufende Segment gelangt, wird es wegen der höheren Geschwindigkeit dieses Segments von den übrigen, zurückbleibenden Stücken entfernt und damit zumindest in Arbeitsrichtung gesehen vereinzelt. Insbesondere in Kombination mit dem versetzten Querschneiden ergibt sich eine konstruktiv einfache und besonders wirksame Vereinzelung der Stücke.

Zweckmäßigerweise ist eine Andrückeinrichtung zum Verschließen von Rändern der Streifen in dem Bereich der Schneideinrichtung vorgesehen. Damit können die beim Schneiden entstehenden Ränder der Streifen zusammengedrückt werden, so daß ein Aufklaffen der Schneidränder und damit ein unerwünschtes Austreten von Füllmaterial vermieden werden kann. Besonders zweckmäßig ist es, wenn die Andrückeinrichtung mit dem Schneidwerkzeug kombiniert ist. Mit einem solchen kombinierten Werkzeug können in einem Arbeitsgang das Teigmaterial geschnitten und dabei zugleich die Ränder zusammengedrückt werden. Damit kann eine sehr kompakte Station realisiert werden, die nur wenig Bauraum erfordert. Dadurch kann auf einer gegebenen Breite der Arbeitsfläche eine hohe Anzahl von Reihen vorgesehen werden.

Vorzugsweise weist die Fülleinrichtung einen Füllrechen mit einer der Zahl der Reihen entsprechenden Anzahl von Auslässen und einem Einlaß auf, der mit einer Pumpe für das Füllungsmaterial verbunden ist. Mit dem Füllrechen kann das von der Pumpe geförderte Füllungsmaterial über die Breite der Arbeitsfläche verteilt werden, so daß es durch die Auslässe hindurch schließlich auf das Teigmaterial aufgebracht werden kann. Durch den Füllrechen wird eine gleichmäßige Versorgung der Auslässe mit Füllungsmaterial erreicht, so daß für jeden Auslaß und damit für jede Reihe ein gleichmäßiger Auftrag an Füllungsmaterial erreicht werden kann. Dazu sind zweckmäßigerweise die Auslässe jeweils mit einem einstellbaren Ventil versehen, um eine ggf. erforderliche Feineinstellung durchführen zu können. Damit können Distributionsunterschiede, wie sie beispielsweise durch unterschiedliche Längen der Zuleitung bedingt sind, ausgeglichen werden. Zweckmäßigerweise ist eine Rücklaufleitung von dem Füllrechen zu einer Niederdruckseite der Pumpe vorgesehen. Die Rücklaufleitung ermöglicht eine besonders einfache und zweckmäßige Verstellung der Menge des aufgetragenen Füllmaterials.

Besonders zweckmäßig ist es, den Füllrechen, das Mehrfachmesser und das Schneidwerkzeug jeweils auswechselbar zu gestalten. Auf diese Weise können sie einen Wechselsatz bilden, der auf die jeweils herzustellende Reihenanzahl abgestimmt ist. Wenn ein Produkt mit anderen Abmessungen und damit anderer Reihenzahl hergestellt werden soll, brauchen dann nur jeweils diese drei Komponenten ausgewechselt zu werden, um die Maschine an die geänderte Reihenanzahl anzupassen. Dies ermöglicht eine besonders rationelle Anpassung der Maschine an unterschiedliche Produkte und damit eine universelle und sogleich flexible Herstellung.

Zweckmäßigerweise weist die Teigbearbeitungsmaschine eine nachgeschaltete Tiefkühleinrichtung auf. Mittels einer solchen Tiefkühleinrichtung können die hergestellten und geschnittenen Stücke gleich anschließend an die Herstellung tiefgefroren werden. Damit sind die Stücke gleich am Ende der Teigbearbeitungsmaschine in einem auslieferungsfähigen Zustand. Sie brauchen dann nur noch mit einem geeigneten Kühlfahrzeug an die Verkaufsstellen zum Aufbacken und Verkaufen ausgefahren zu werden.

Die Erfindung wird nachfolgend unter Bezugnahme auf die beigefügte Zeichnung erläutert, in der ein vorteilhaftes Ausführungsbeispiel der Erfindung dargestellt ist. Es zeigen:
- Fig. 1: Eine Seitenansicht der erfindungsgemäßen Teigbearbeitungsmaschine;
- Fig. 2: eine Aufsicht der erfindungsgemäßen Teigbearbeitungsmaschine;
- Fig. 3: eine Detailansicht einer Füllungseinrichtung der erfindungsgemäßen Teigbearbeitungsmaschine;
- Fig. 4: eine Detailansicht einer Querschneideeinrichtung der erfindungsgemäßen Teigbearbeitungsmaschine;
- Fig. 5: eine Detailansicht einer Schneideinrichtung der erfindungsgemäßen Teigbearbeitungsmaschine;
- Fig. 6: eine Detailansiht der Querschneideinrichtung der erfindungsgemäßen Teigbearbeitungsmaschine; und
- Fig. 7: eine Aufsicht auf das geschnittene Teigmaterial.

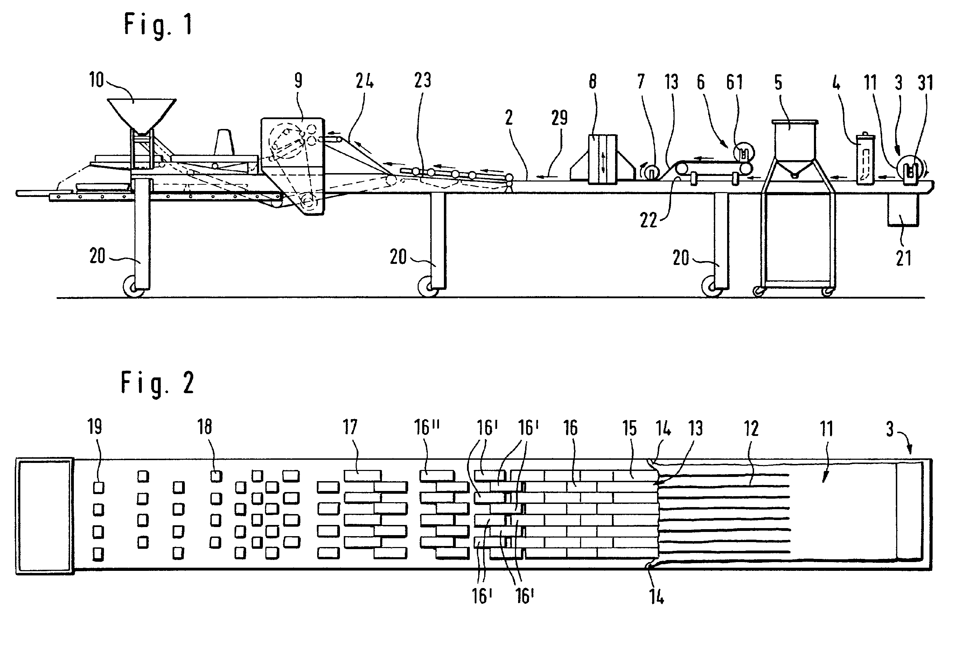

In Fig. 1 ist eine erfindungsgemäße Teigbearbeitungsmaschine dargestellt. Sie weist einen Rahmen mit einer Arbeitsfläche 2 auf, der über eine Mehrzahl von Beinen 20 auf dem Boden abgestützt ist. Die Arbeitsfläche 2 umfaßt eine Transporteinrichtung, die als Förderbänder 22, 23, 24 und 25 ausgeführt ist. Für den Antrieb der Förderbänder ist eine gemeinsame Antriebseinrichtung 21 vorgesehen; es versteht sich, daß auch mehrere unabhängige Antriebseinrichtungen vorgesehen sein können. Von der Antriebseinrichtung 21 werden die Förderbänder 22, 23, 24, 25 so bewegt, daß ihre Oberseite sich in Richtung der durch den Pfeil 29 verdeutlichten Arbeitsrichtung bewegt. Der Antrieb der Förderbänder 23, 24 erfolgt derart, daß ihre Geschwindigkeit größer als diejenige des Förderbandes 22 ist.

An dem Rahmen sind ferner die einzelnen Stationen fest oder beweglich angeordnet. Die Stationen werden nachfolgend näher beschrieben.

An einem hinteren Ende der Teigbearbeitungsmaschine ist eine Abwickelstation 3 angeordnet. Sie ist mit einer Aufnahmeeinrichtung 31 für eine Teigrolle versehen. Von dieser wird ein Teigblatt 11 abgewickelt, das die untere Lage Teigmaterial bildet, und von dem Förderband 22 in Arbeitsrichtung 29 transportiert. Weiter in Arbeitsrichtung gesehen sind eine Benetzungsstation 4 sowie eine Fülleinrichtung 5 angeordnet. Die Benetzungsstation dient zur Benetzung des Teigs, um die Anhaftung eines später aufzulegenden oberen Teigblatts zu verbessern. Die Füllungseinrichtung 5 erzeugt eine Vielzahl von Füllungsreihen 12 auf dem unterem Teigblatt 11. Der Übersichtlichkeit halber sind in dem Fig. 2 dargestellten Ausführungsbeispiel lediglich acht Reihen dargestellt, üblicherweise sind es über zehn Reihen, beispielsweise 22 Reihen. Weiter in Arbeitsrichtung 29 gesehen ist eine Zuführeinrichtung 6 für die obere Lage Teigmaterial angeordnet. Sie ist mit einer Aufnahme 61 für eine Teigrolle versehen, von der das obere Teigblatt 13 abgewickelt wird. Dieses wird mittels einer geeigneten Vorschubeinrichtung von oben auf das untere Teigblatt 11 mit den Füllungsstreifen 12 aufgelegt.

Weiter in Arbeitsrichtung folgt die Schneideinrichtung 7. Sie dient zum Schneiden des aus unterem und oberen Teigblatt 11, 13 und der dazwischen liegenden Füllung 12 bestehenden Teigmaterials in Reihen mit einer Breite von etwa 20 mm. Etwaige überschüssige Teigränder 14 werden zur Seite hin abgeführt. Damit beträgt im dargestellten Ausführungsbeispiel die Arbeitsbreite 440 mm. Die gesamte Breite der Arbeitsfläche der Teigbearbeitungsmaschine beträgt in dem dargestellten Ausführungsbeispiel 600 mm. Es wird also bis auf gewisse Randbereiche nahezu die gesamte Breite der Arbeitsfläche für die Teigbearbeitung verwendet. Darin liegt ein besonderer Vorteil der erfindungsgemäßen Teigbearbeitungsmaschine. Herkömmliche Maschinen nutzen in der Regel schon bei der Schneidestation nur noch weniger als die Hälfte der Breite der Arbeitsfläche.

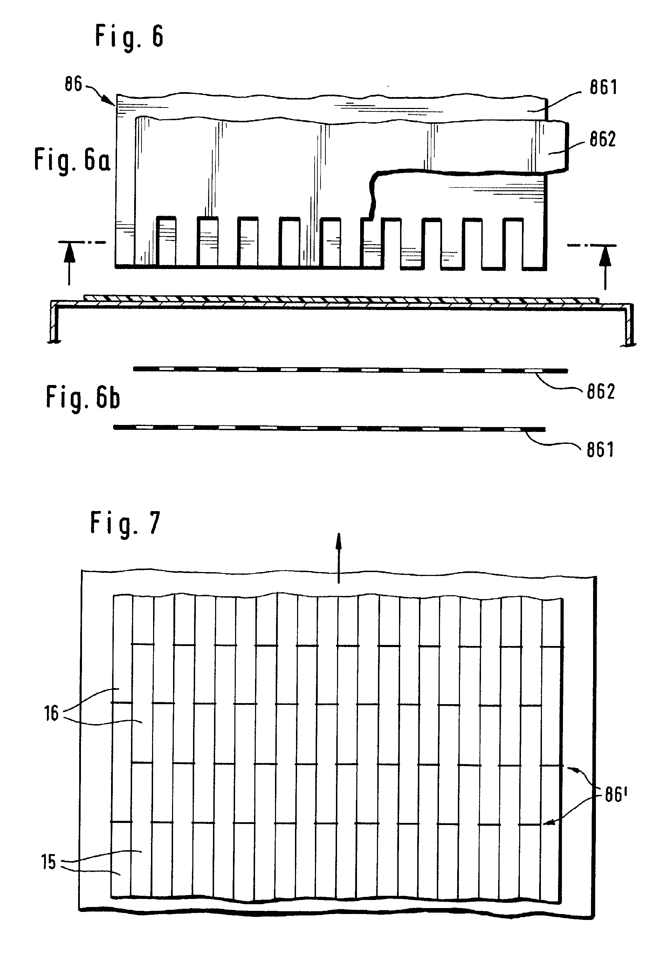

Weiter in Arbeitsrichtung ist eine Querschneideinrichtung 8 angeordnet. Sie trennt die Reihen 15 des Teigmaterials in rechteckige Teigstücke 16. Wie man aus der Darstellung in Fig. 2 erkennt, sind die Teigstücke 16 nicht alle auf einer Höhe, sondern Reihenweise versetzt zueinander angeordnet. Das findet seinen Grund darin, daß die Querschneideinrichtung 8 mit einem Doppelmesser 86 versehen ist, das zwei wechselweise unterbrochene Klingen 861, 862 aufweist. Dadurch ergeben sich zwei unterbrochene, zu einander versetzte Schnittlinien 86', in den Reihen 15 des Teigmaterials, wie sie in vergrößerter Darstellung in Fig. 7 dargestellt ist. Dadurch entsteht ein Versatz zwischen den Stücken 16. Der Versatz der Stücke 16 ermöglicht eine besonders einfache Vereinzelung, wie nachfolgend erläutert wird.

Wie man besonders aus Fig. 1 erkennen kann, endet hinter der Querschneideinrichtung 8 das Förderband 22 und das Förderband 23 beginnt. Das Förderband 23 läuft mit einer gegenüber dem Förderband 22 höheren Geschwindigkeit. Wie insbesondere in Fig. 2 zu erkennen ist, sind die Teigstücke 16 abwechselnd versetzt zueinander angeordnet. Das hat zur Folge, daß nicht alle nebeneinander liegende Teigstücke 16 zur selben Zeit auf das Förderband 23 gelangen, sondern nur die in jeder zweiten Reihe. Sowie diese Teigstücke 16' das schnellerlaufende Förderband erreichen, werden sie abtransportiert und trennen sich von den langsameren Teigstücken 16, so daß ein gewisser Abstand entsteht. Damit sind auf dem Förderband 23 die Teigstücke 16'' bereits in Arbeitsrichtung von den übrigen getrennt, jedoch noch nicht vollständig vereinzelt. Um dies zu erreichen, ist das Förderband 24 vorgesehen, das mit einer gegenüber dem Förderband 23 wiederum höheren Geschwindigkeit läuft. Von den Teigstücken 16'' laufen diejenigen, deren Anfang in Arbeitsrichtung gesehen weiter vorne ist, zuerst auf das Förderband 24 auf und werden von diesem erfaßt und von den Teigstücken, deren Anfang weiter hinten liegt, wegbewegt. Schließlich laufen auch die übrigen Teigstücke auf das Förderband 24 auf und folgen nach. Zweckmäßigerweise ist die Geschwindigkeit des Förderbands 23 dabei so im Verhältnis zu derjenigen des Förderbands 23 gewählt, daß sich ein zur Vereinzelung ausreichender Abstand einstellt.

Die vereinzelten Teigstücke 17 werden einer in Arbeitsrichtung weiter hinten angeordneten Aufrolleinrichtung 9 zugeführt. Mittels der Aufrolleinrichtung 9 werden die Teigstücke 17 auf an sich bekannte Weise, die daher nicht näher erläutert zu werden braucht, schneckenartig aufgerollt. Die aufgerollten Teigstücke 18 laufen dann durch eine Streuseleinrichtung 10. Sie dient zum Bestreuen der aufgerollten Teigstücke 18 mit Streuseln oder anderen Materialien je nach Wunsch. Damit sind die gerollten Teigstücke 18 zu Mini-Schnecken 19 geworden. Sie können abtransportiert oder in eine sich anschließende Tiefkühleinrichtung (nicht dargestellt) weitertransportiert werden.

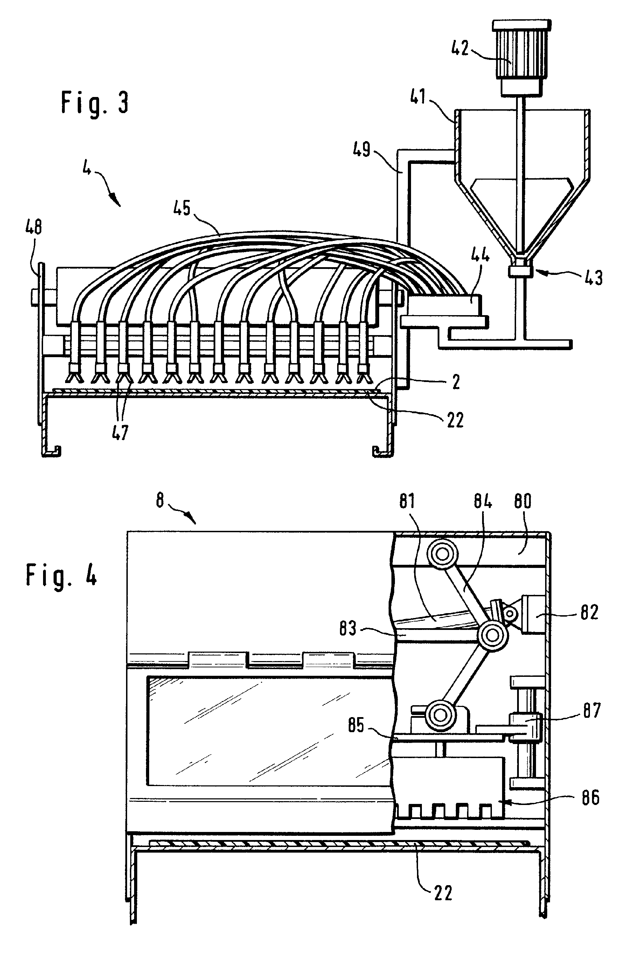

In Fig. 3 ist die Füllungseinrichtung 4 detaillierter dargestellt. In einem trichterartigen Mischbehälter 41 befindet sich ein Vorrat der Füllungsmasse. Über eine von einem Elektromotor 42 angetriebene Pumpe 43 wird die Füllungsmasse über eine Leitung zu einem Verteiler 44 geführt, von dem sie über Schläuche 45 zu einer Vielzahl von Auslässen 47 geführt wird. Bei den Auslässen 47 handelt es sich um Doppelauslässe, von denen jeder zwei Ausstromöffnungen aufweist, um damit zwei Streifen von Füllmaterial 12 zu erzeugen. Die Auslässe 47 bilden mit den Schläuchen 45 und dem Verteiler 44 eine Einheit, die in einen Aufnahmerahmen 48 der Füllungseinrichtung 4 auswechselbar eingesetzt ist. Wenn andere Produkte mit einer abweichenden Reihenanzahl hergestellt werden sollen, braucht lediglich der Füllrechen mit den Auslässen 47, den Schläuchen 45 und dem Verteiler 44 ausgetauscht zu werden gegen einen anderen Füllrechen mit einer passenden Reihenanzahl. Ferner vorgesehen ist eine Rücklaufleitung 49, die den Verteiler 44 mit einem oberen Ende des Behälters 41 verbindet. Die Rücklaufleitung 49 ist mit einem Einstellventil (nicht dargestellt) versehen, mit dem die Durchflußmenge eingestellt werden kann. Auf diese Weise kann reguliert werden, welche Menge des von der Pumpe 43 geförderten Füllungsmaterials zurückgefördert wird bzw. von dem Verteiler 44 über die Schläuche 45 und die Auslässe 47 als Füllung 12 auf das untere Teigblatt 11 aufgetragen wird.

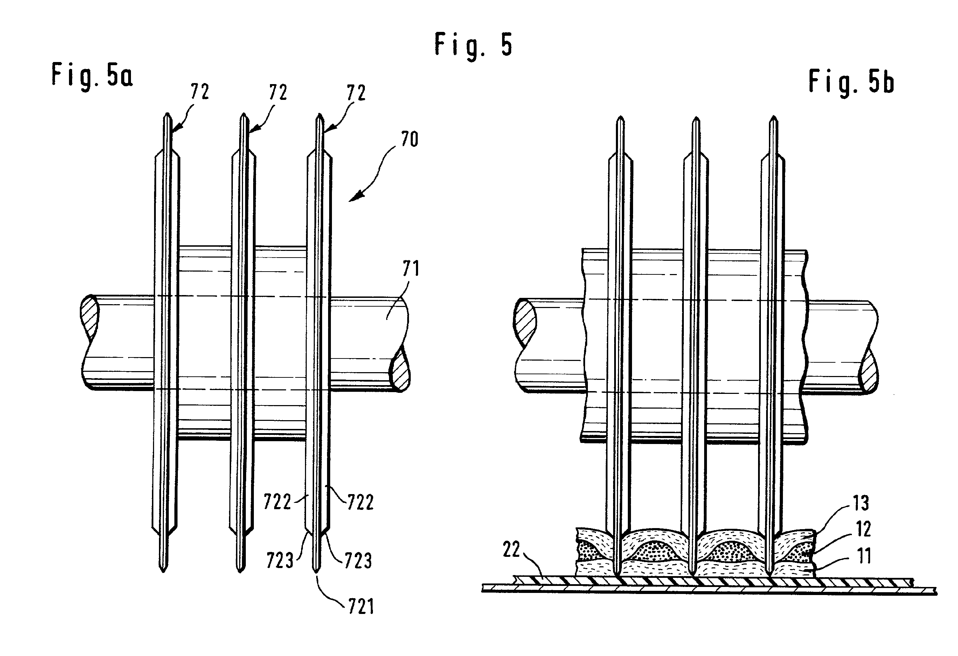

In Fig. 5 ist ein Schneidwerkzeug 70 der Schneideinrichtung 7 dargestellt. Das Schneidwerkzeug 70 besteht aus einer Vielzahl von Schneidscheiben 72, die auf einer gemeinsamen Welle 71 angeordnet sind. Die Schneidscheiben 72 weisen an ihrem äußeren Umfang eine Schneidkante 721 sowie beidseitig angeordnete Druckrollen 722 auf. Die Druckrollen 722 weisen an ihrem äußeren Umfang Druckschultern 723 auf. Die Druckschultern 723 sind konusartig geformt, mit dem größeren Durchmesser nahe der Schneidkante 721. Wie man insbesondere aus Fig. 5b erkennen kann, dient die Druckrolle 722 mit den Druckschultern 723 dazu, die oberen und unteren Teigblätter 11, 13 in dem Bereich des von der Schneidkante 721 erzeugten Schnittrands zusammenzudrücken. Dadurch wird das obere Teigblatt 13 so fest auf das untere Teigblatt 11 gedrückt, daß ein Aufklaffen der Schnittränder vermieden wird. Dadurch kann verhindert werden, daß das Füllungsmaterial 12 an den Schnitträndern austritt.

In Fig. 4 ist der Aufbau der Querschneideinrichtung 8 dargestellt. An einem sich quer über die Breite der Arbeitsfläche erstreckenden Balken 80 sind ein Pendelarm 84, ein an dem Pendelarm 84 angeordneter Verbindungsarm 83 sowie ein an dem unteren Ende des Pendelarms 84 angeordnetes Messer 86 befestigt. Die Querschneideinrichtung 8 umfaßt ferner einen pneumatischen Antriebszylinder 81, der über ein Lager 82 an einem Rahmen der Querschneideinrichtung abgestützt ist. Der Pneumatikzylinder 81 wirkt auf den Pendelarm 84 und dem Verbindungsarm 83 in der Weise, daß beim Betätigen des Pneumatikzylinders 81 das Messer 86 an einem Linearlager 87 geführt nach unten zu dem Förderband 22 hin und wieder zurück nach oben bewegt wird. Das Messer 86 ist als Doppelmesser mit einer vorderen Klinge 861 und einer hinteren Klinge 862 ausgebildet. Den Aufbau des Messers 86 kann man insbesondere aus Fig. 6 erkennen. Danach sind sowohl die vordere wie auch die hintere Klinge 861, 862 an ihrem unteren Ende kammartig ausgebildet. Die beiden Klingen 861, 862 sind derart versetzt zueinander angeordnet, daß sie Zahn-auf-Lücke versetzt sind. Der pneumatische Antriebszylinder 81 wird von einer Steuereinrichtung (nicht dargestellt) taktweise betätigt, so daß das Messer 86 guillotineartig nach unten bewegt wird und das Teigmaterial sauber schneidet. In Fig. 6b ist dies in einer Ansicht von unten dargestellt. Die schneidenden Bereiche (Zähne) sind mit einem kräftigen Strich dargestellt, während die nichtschneidenden Bereiche (Lücken) mit einem dünnen Strich dargestellt sind. Man erkennt, daß die Zähne der Klinge 861 immer in dem Bereich der Lücken der Klinge 862 angeordnet sind und andersherum. Damit wird erreicht, daß das Teigmaterial über die gesamte Breite hinweg geschnitten wird, jedoch in zwei parallel versetzten unterbrochenen Schnittlinien 86'. Zweckmäßigerweise sind die Zähne etwas länger als die Lücken. Damit wird erreicht, daß die Zähne der vorderen Klinge 861 und die der hinteren Klinge 862 sich in ihrem äußeren Bereich jeweils ein wenig überlappen. Dadurch wird erreicht, daß die einzelnen Reihen sicher in Stücke geschnitten werden. Ohne die Überlappung bestünde die Gefahr, daß bei aufgrund von Toleranzen nicht immer vermeidbaren seitlichen Abweichungen des Teigmaterials die Zähne der Klingen 861, 862 nicht genau mit der Lage der Reihen übereinstimmen. Ein unvollständiges Durchtrennen der Reihen wäre dann die unerwünschte Folge. Dieser Gefahr kann mit der Überlappung der Zähne begegnet werden.

Das Doppelmesser 86 mit den Klingen 861, 862 ist auswechselbar in dem Messerhalter 85 gehaltert. Ebenfalls auswechselbar gelagert ist das Schneidwerkzeug 70 der Schneideinrichtung 7 sowie der von dem Verteiler 44, den Schläuchen 45 und den Auslässen 47 gebildete Füllrechen der Fülleinrichtung 4. Der Füllrechen, das Schneidwerkzeug sowie das Messer bilden einen Wechselsatz. Zweckmäßigerweise sind weitere Wechselsätze vorgesehen, die für andere Anzahlen von Reihen ausgelegt sind. Zweckmäßige Reihenanzahlen liegen in dem Bereich zwischen 10 und 30, insbesondere 22. Wenn Teigprodukte mit anderen Abmessungen, beispielsweise etwas größere Produkte mit größerer Breite hergestellt werden sollen, so kann ein solcher Wechselsatz verwendet werden, der für eine entsprechend geringere Reihenanzahl ausgelegt ist, und umgekehrt.

Mit einer solchen Teigbearbeitungsmaschine können kleine, gefüllte Teigstücke für Mini-Backstücke mit hoher Stückzahl vollautomatisiert hergestellt werden. Durch die Automatisierung wird ebenfalls eine gleichbleibende, konstant hohe Qualität erreicht. Teigstücke mit einem Produktgewicht von etwa 15 bis 20 g können auf einer Teigbearbeitungsmaschine mit einer Arbeitsbreite von 440 mm in einer Menge von 350 kg pro Stunde hergestellt werden. Die hergestellten Teigstücke sind nach dem Tieffrieren auslieferungsfertig und können an die Verkaufsstellen ausgeliefert werden, wo sie in den Schaubäkkereien nur noch aufgebacken zu werden brauchen.

## Patentansprüche

1. Teigbearbeitungsmaschine zur Herstellung gefüllter Backstücke, insbesondere von gefülltem Kleingebäck, mit
- einer Arbeitsfläche (2) zum Auflegen von Teigmaterial, das aus zwei Teiglagen (11,13) mit einer dazwischenliegenden Füllung (12) besteht, und Stationen zum Bearbeiten des Teigmaterials,
wobei die Arbeitsfläche (2) eine Transporteinrichtung (21, 22, 23, 24) zum Bewegen des Teigmaterials in einer Arbeitsrichtung (29) aufweist, **dadurch gekennzeichnet, daß** die Stationen
- eine erste Zuführeinrichtung (3) für eine untere Lage Teigmaterial (11)
- eine Fülleinrichtung (5), die zum Aufbringen von Füllungsmaterial (12) in einer Vielzahl von Reihen, vorzugsweise mindestens 20, auf die untere Lage Teigmaterial (11) ausgebildet ist,
- eine zweite Zuführeinrichtung (6) für eine obere Lage Teigmaterial (13),
- eine Schneideinrichtung (7) mit einem vielreihigen Schneidwerkzeug (70), das zum Längsschneiden des Teigmaterials in eine Vielzahl von Streifen (15) ausgebildet ist und
- eine Querschneideinrichtung (8) zum Aufteilen der Streifen (15) in Stücke (16) mit einem Trennwerkzeug umfassen, das sich quer zur Arbeitsrichtung (29) über die Breite der Arbeitsfläche (2) erstreckt.

2. Teigbearbeitungsmaschine nach Anspruch 1, **dadurch gekennzeichnet, daß** hinter der Querschneideinrichtung (8) eine Aufrolleinrichtung (9) vorgesehen ist, die zum Aufwickeln der Stücke (16) zu Schnecken (18) ausgebildet ist.

3. Teigbearbeitungsmaschine nach Anspruch 1 oder 2, **dadurch gekennzeichnet, daß** die Querschneideinrichtung mit einem auf und ab beweglichen Fallmesser (86) und einer Antriebseinrichtung (81) zur taktweisen Betätigung versehen ist.

4. Teigbearbeitungsmaschine nach einem der Ansprüche 1 bis 3, **dadurch gekennzeichnet, daß** die Querschneideinrichtung (8) mit einem Mehrfachmesser (86) versehen ist, das mindestens zwei wechselweise unterbrochene Schneidkanten (861, 862) aufweist.

5. Teigbearbeitungsmaschine nach Anspruch 4, **dadurch gekennzeichnet, daß** der Abstand zwischen den Schneidkanten (861, 862) so bemessen ist, daß er der halben Länge der Stücke (16) entspricht.

6. Teigbearbeitungsmaschine nach einem der Ansprüche 3 bis 5, **dadurch gekennzeichnet, daß** das Mehrfachmesser (86) so ausgerichtet ist, daß die Schneidkanten (861, 862) rechtwinklig zur Arbeitsrichtung (29) angeordnet sind.

7. Teigbearbeitungsmaschine nach einem der Ansprüche 3 bis 5, **dadurch gekennzeichnet, daß** das Mehrfachmesser (86) so ausgerichtet ist, daß die einzelnen Schnittlinien schräg zur Arbeitsrichtung angeordnet sind.

8. Teigbearbeitungsmaschine nach einem der Ansprüche 1 bis 7, **dadurch gekennzeichnet, daß** die Transporteinrichtung (2) ein mit erhöhter Geschwindigkeit arbeitendes Segment (23) aufweist, das in Arbeitsrichtung (29) gesehen hinter der Querschneideinrichtung (8) angeordnet ist.

9. Teigbearbeitungsmaschine nach einem der Ansprüche 1 bis 8, **dadurch gekennzeichnet, daß** eine Andrückeinrichtung (722) zum Verschließen von Rändern der Streifen in dem Bereich der Schneideinrichtung (7) vorgesehen ist.

10. Teigbearbeitungsmaschine nach Anspruch 9, **dadurch gekennzeichnet, daß** die Andrückeinrichtung (722) und das Schneidwerkzeug (70) kombiniert sind.

11. Teigbearbeitungsmaschine nach einem der Ansprüche 1 bis 10, **dadurch gekennzeichnet, daß** die Fülleinrichtung (4) einen Füllrechen (44, 45) mit einer der Anzahl der Reihen entsprechenden Anzahl von Auslässen (47) und einem Einlaß aufweist, der mit einer Pumpe (42, 43) für das Füllungsmaterial verbunden ist.

12. Teigbearbeitungsmaschine nach Anspruch 11, **dadurch gekennzeichnet, daß** die Auslässe (47) jeweils mit einem Einstellventil versehen sind.

13. Teigbearbeitungsmaschine nach Anspruch 11 oder 12, **dadurch gekennzeichnet daß** eine Rücklaufleitung (49) von dem Füllrechen (44, 45) zu einer Niederdruckseite der Pumpe (42, 43) vorgesehen ist.

14. Teigbearbeitungsmaschine nach Anspruch 11, **dadurch gekennzeichnet, daß** der Füllrechen (44, 45), das Mehrfachmesser (86) und das Schneidwerkzeug (70) einen auswechselbaren, auf die Anzahl der Reihen abgestimmten Wechselsatz bilden.

15. Teigbearbeitungsmaschine nach einem der Ansprüche 1 bis 14, **dadurch gekennzeichnet, daß** der Teigbearbeitungsmaschine eine Tiefkühleinrichtung nachgeschaltet ist.
